# EUROPEAN PATENT APPLICATION

(11) **EP 4 825 809 A1**
(43) Date of publication of application: **21.10.2026**
(21) Application number: 24903708.6
(22) Date of filing: 11.12.2024
(51) Int. Cl.: C01G 55/00, B01J 23/889, C25B 1/04, C25B 11/081, C25B 11/093

(54) **IRIDIUM-CONTAINING MANGANESE OXIDE, CATALYST, ELECTRODE, AND WATER ELECTROLYSIS METHOD**

(30) Priority: 12.12.2023 JP 2023209657
(71) Applicant: Tosoh Corporation, Shunan-shi, Yamaguchi 746-8501 (JP); RIKEN, Wako-shi, Saitama 351-0198 (JP)
(72) Inventor: KITADE, Naoya, Shunan-shi, Yamaguchi 746-8501 (JP); MISHIMA, Takayoshi, Shunan-shi, Yamaguchi 746-8501 (JP); OKADA, Takuya, Shunan-shi, Yamaguchi 746-8501 (JP); NAKAMURA, Ryuhei, Wako-shi, Saitama 351-0198 (JP); KONG, Shuang, Wako-shi, Saitama 351-0198 (JP); LI, Ailong, Wako-shi, Saitama 351-0198 (JP)
(74) Representative: TBK
(86) International application number: PCT/JP2024/043756
(87) International publication number: WO 2025/127054

(57) **Abstract**

The present disclosure provides at least one of an iridium-containing manganese oxide that exhibits high oxygen evolution electrode catalytic activity in water electrolysis, a catalyst comprising the same, an electrode comprising the catalyst or a water electrolysis method in which the electrode is used. The iridium-containing manganese oxide according to the present invention is an iridium-containing manganese oxide having a molar ratio of iridium to manganese of 0.001 or more and 0.250 or less. In one aspect, the manganese oxide is manganese dioxide having a β-type crystal structure. In one aspect, furthermore, the ratio of the lattice constant in the a-axis direction to the lattice constant in the c-axis direction is 1.420 or more and less than 1.521.

## Description

### TECHNICAL FIELD

The present disclosure relates to an iridium-containing manganese oxide, a catalyst, an electrode and a water electrolysis method.

### BACKGROUND ART

Against the backdrop of the issues of fossil fuel depletion and environmental pollution, the utilization of hydrogen as clean energy and techniques for its manufacture have been attracting attention. One effective means for manufacturing high-purity hydrogen gas is water electrolysis.

A solid polymer membrane (PEM) water electrolysis apparatus is typically composed of a serial stack of cells each including a membrane-electrode assembly (MEA) and separators sandwiching the MEA. The MEA includes a solid polymer electrolyte membrane having proton conductivity (hereinafter also referred to simply as "electrolyte membrane"), catalyst layers and electrically conductive substrates. In a common method for producing an MEA, the MEA is produced by obtaining a catalyst-coated membrane (CCM) by forming a catalyst layer on both surfaces of an electrolyte membrane and joining an electrically conductive substrate to the surfaces of the catalyst layers of the CCM by hot-press bonding (e.g., Patent Document 1).

CCMs can be easily manufactured on an industrial scale by applying an ink in which an oxygen evolution electrode catalyst is dispersed in a solvent to an electrolyte membrane. Among oxygen evolution electrode catalysts, iridium catalysts are widely known to exhibit very high activity (e.g., Non Patent Document 1).

Iridium, however, is very expensive due to its small reserves and concentration in specific geographic regions. To address this, the development of alternative catalysts using inexpensive transition metals is ongoing. In recent years, manganese (Mn) and other transition metal materials have been studied as alternative catalysts. In Non

Patent Document 2, an iridium-containing manganese oxide obtained by introducing a small amount of iridium into α-MnO₂ is reported. In Patent Document 2, an iridium-manganese oxide complex electrode material obtained by introducing iridium into a manganese oxide electrodeposited directly on an electrically conductive substrate, rather than applying a powder of an oxygen evolution electrode catalyst to an electrolyte membrane, is disclosed.

### PRIOR ART DOCUMENTS

### PATENT DOCUMENTS

Patent Document 1: JP-A-2014-22140
Patent Document 2: WO 2022/264960

### NON PATENT DOCUMENTS

Non Patent Document 1: F. Birol, World Energy Outlook 2016, International Energy Agency (IEA), Paris, 2016.
Non Patent Document 2: Nature Communications (2024) 15: 95

### DISCLOSURE OF INVENTION

### TECHNICAL PROBLEM

Iridium-containing manganese oxides like those in Non Patent Document 2 and Patent Document 2 have been studied as oxygen evolution electrode catalysts in water electrolysis. Their catalytic activity, however, requires further improvement for practical application.

An object of the present disclosure is to provide at least one of an iridium-containing manganese oxide that exhibits high oxygen evolution electrode catalytic activity, a catalyst comprising the same, an electrode comprising the catalyst or a water electrolysis method in which the electrode is used.

### SOLUTION TO PROBLEM

In the present disclosure, various characteristics of iridium-containing manganese oxides were studied. As a result, it was found that an iridium-containing manganese oxide having a specific iridium-manganese molar composition can be obtained by controlling the method for preparing the manganese oxide and the method for supporting the iridium, and that such an oxide exhibits significantly higher oxygen evolution electrode catalytic activity in water electrolysis compared with known iridium-containing manganese oxides.

That is, the present invention is as set forth in the claims, and the gist of the present disclosure is as follows.
[1] An iridium-containing manganese oxide having a molar ratio of iridium to manganese of 0.001 or more and 0.250 or less.
[2] The iridium-containing manganese oxide according to [1] above, wherein the manganese oxide is manganese dioxide having a β-type crystal structure.
[3] The iridium-containing manganese oxide according to [2] above, wherein a ratio of a lattice constant in an a-axis direction to a lattice constant in a c-axis direction is 1.420 or more and less than 1.521.
[4] The iridium-containing manganese oxide according to any one of [1] to [3] above, wherein a D50 size in a volume-based particle size distribution is 0.1 µm or more and 50.0 µm or less.
[5] The iridium-containing manganese oxide according to any one of [1] to [4] above, wherein a BET specific surface area is 1 m²/g or more and 200 m²/g or less.
[6] The iridium-containing manganese oxide according to any one of [1] to [5] above, wherein in an X-ray powder diffraction pattern, a full width at half maximum of a peak that appears at 2θ = 28° ± 1.5° when CuKα radiation is used as an X-ray source is more than 1.90° and 4.00° or less.
[7] A catalyst comprising the iridium-containing manganese oxide according to any one of [1] to [6] above.
[8] An electrode comprising the catalyst according to [7] above.
[9] A water electrolysis method in which the electrode according to [8] above is used.

### ADVANTAGEOUS EFFECTS OF INVENTION

According to the present disclosure, there can be provided at least one of an iridium-containing manganese oxide that exhibits high oxygen evolution electrode catalytic activity, a catalyst comprising the same, an electrode comprising the catalyst or a water electrolysis method in which the electrode is used.

### DESCRIPTION OF EMBODIMENTS

In the following, the present disclosure will be described by providing an example of its embodiment. It should be noted that the principal terms in the present embodiment are as follows. In addition, the individual configurations and parameters disclosed herein can be combined in any manner, and the upper limits and lower limits of values disclosed herein can be combined in any manner.

The present embodiment is an iridium-containing manganese oxide containing iridium and having a molar ratio of iridium to manganese of 0.001 or more and 0.250 or less.

The manganese oxide can be any oxide of manganese (Mn) and can be, for example, one or more selected from the group consisting of manganese oxide (MnO), dimanganese trioxide (Mn₂O₃), manganese dioxide (MnO₂) and trimanganese tetraoxide (Mn₃O₄). In order to have high oxygen evolution electrode catalytic activity, the manganese oxide in the iridium-containing manganese oxide according to the present embodiment preferably includes manganese dioxide, and preferably is electrolytic manganese dioxide.

The manganese dioxide is manganese dioxide having a γ-type, β-type, ε-type or α-type crystal structure, and preferably is manganese dioxide having a β-type crystal structure (Hereinafter also referred to as "β-type manganese dioxide.") because it is likely to exhibit high oxygen evolution electrode catalytic activity when iridium is introduced thereinto. It should be noted that electrolytic manganese dioxide is manganese dioxide having a γ-type or δ-type crystal structure, but introducing iridium thereinto and performing heat treatment (e.g., at 200°C or higher) converts it into manganese dioxide having a β-type crystal structure. The manganese dioxide contained in the iridium-containing manganese oxide according to the present embodiment may include two or more types of manganese dioxide having different crystal structures. That is, the iridium-containing manganese oxide according to the present embodiment preferably includes iridium-containing β-type manganese dioxide, and more preferably is iridium-containing β-type manganese dioxide.

The crystal structure of the manganese oxide can be identified by comparing its X-ray powder diffraction (Hereinafter also referred to as "XRD.") pattern with an XRD pattern registered in the PDF (Powder Diffraction File^{®}) of the ICDD (International Centre for Diffraction Data) (Hereinafter also referred to as "reference pattern."). For example, as the reference pattern for manganese dioxide having a γ-type, β-type, ε-type, δ-type or α-type crystal structure, PDF No. 14-0644 (γ-type), 24-0735 (β-type), 30-0820 (ε-type), 80-1098 (δ-type) or 44-0141 (α-type), respectively, can be used.

In the present embodiment, the XRD pattern is one obtained by an XRD measurement performed under the following conditions using a commonly used X-ray powder diffractometer (e.g., instrument name, Ultima IV Protectus; manufactured by Rigaku Corporation).
Accelerating current and voltage: 40 mA and 40 kV
X-ray source: CuKα radiation (λ = 1.5405 Å)
Measurement mode: continuous scanning
Scan condition: 4°/min
Measurement range: 2θ = 10° to 80°
Vertical divergence-limiting slit: 10 mm
Divergence/Incident slits: 1°
Receiving slit: open
Detector: D/teX Ultra
A Ni filter is used

In the present embodiment, an XRD peak is a peak that is detected with identified peak-top 2θ in an analysis of an XRD pattern using commonly used analysis software (e.g., SmartLab Studio II, manufactured by Rigaku Corporation). Examples of conditions for the analysis of the XRD pattern include the following conditions.
Fitting conditions: automatic, background refined
A variance pseudo-Voigt function (peak profile)

For the manganese oxide according to the present embodiment, its crystal structure can be identified by comparing its X-ray powder diffraction (Hereinafter also referred to as "XRD.") pattern with an XRD pattern registered in the PDF (Powder Diffraction File^{®}) of the ICDD (International Centre for Diffraction Data) (Hereinafter also referred to as "reference pattern.").

For the iridium-containing manganese oxide according to the present embodiment, the full width at half maximum (Hereinafter also referred to simply as "half width.") of an XRD peak having a peak top at 2θ = 28.00° ± 1.50° in an XRD pattern obtained when CuKα radiation (λ = 1.5405 Å) is used as the X-ray source (Hereinafter also referred to as "Mn peak.") is preferably 0.50° or more, 1.00° or more or more than 1.90° for the lower limit, and preferably is 4.00° or less or 3.50° or less for the upper limit. The full width at half maximum of this peak appearing at 2θ = 28° ± 1.5° can preferably be, for example, more than 1.90° and 4.00° or less. When the half width of the Mn peak is such a value, excellent oxygen evolution electrode catalytic activity is exhibited.

The iridium-containing manganese oxide according to the present embodiment preferably has a ratio of the lattice constant in the a-axis direction (Hereinafter also referred to as "lattice constant a.") to the lattice constant in the c-axis direction (Hereinafter also referred to as "lattice constant c.") (Hereinafter also referred to as "a/c ratio.") of 1.420 or more and less than 1.521 in a case where its crystal structure is β-type manganese dioxide (tetragonal phase). When the a/c ratio is such a value, high oxygen evolution electrode catalytic activity is more likely to be obtained because a larger amount of iridium contributes to the reaction as a result of the formation of a uniform solid solution of iridium in the manganese oxide. The a/c ratio is preferably 1.420 or more, 1.450 or more or 1.480 or more and less than 1.521 or 1.520 or less because in that case higher oxygen evolution electrode catalytic activity is likely to be obtained. As a specific combination of an upper limit and a lower limit of the a/c ratio, 1.420 or more and less than 1.521 is preferred, and 1.480 or more and 1.520 or less is more preferred.

The iridium-containing manganese oxide according to the present embodiment preferably has a lattice constant a of 4.20 Å or more and 4.51 Å or less, more preferably 4.30 Å or more and 4.45 Å or less, in a case where its crystal structure is β-type manganese dioxide (tetragonal phase). The iridium-containing manganese oxide according to the present embodiment, furthermore, preferably has a lattice constant c of 2.70 Å or more and 3.18 Å or less, more preferably 2.80 Å or more and 3.10 Å or less, in a case where its crystal structure is β-type manganese dioxide (tetragonal phase).

For lattice constant a and lattice constant c, lattice constant a [Å] and lattice constant c [Å] in the tetragonal phase can be calculated from the peak position of an XRD peak having a peak top at a lattice spacing d = 3.11 ± 0.11 Å, which corresponds to the tetragonal (110) plane (Hereinafter also referred to as "(110) peak."), and the peak position of an XRD peak having a peak top at a lattice spacing d = 2.40 ± 0.10 Å, which corresponds to the tetragonal (101) plane (Hereinafter also referred to as "(101) peak."), in the XRD pattern specified above. For the a/c ratio, the a/c ratio can be calculated using the following formula from the lattice constant a and lattice constant c obtained. $a / c ratio = lattice constant a \left[Å\right] / lattice constant c \left[Å\right]$ (1)

The iridium-containing manganese oxide according to the present embodiment contains iridium (Ir). The iridium can be contained in any state in which interactions between it and the manganese oxide can occur, and it is preferred that the manganese oxide contain the iridium. The state in which the manganese oxide contains the iridium can be, for example, one or more states selected from the group consisting of a state in which the iridium is mixed with the manganese oxide, a state in which the iridium is supported on the manganese oxide and a state in which the iridium forms a solid solution with the manganese oxide. Preferably, the iridium is in a state in which at least part of the iridium forms a solid solution with the manganese oxide.

The iridium contained in the iridium-containing manganese oxide according to the present embodiment can be in any form. The iridium only needs to be contained in one or more forms selected from the group consisting of a metal, a cation and a compound, and preferably is contained in one or more forms selected from the group consisting of a metal, a cation and an oxide. The iridium contained in the iridium-containing manganese oxide according to the present embodiment is preferably contained in the manganese oxide at least as iridium ions, and a state in which at least a subset of the iridium ions is substituted for manganese ions in the manganese oxide, that is, a state in which at least part of the iridium forms a solid solution with the manganese oxide, is more preferred.

In a state in which the iridium is supported on the manganese oxide, the iridium only needs to be contained in one or more selected from the group consisting of the surface, pores and framework structure of the manganese oxide. For example, when the iridium is supported on the surface of the manganese oxide, the iridium can be, for example, in a state of an oxide, or in a state in which it is supported as iridium oxide. When the iridium is supported in pores of the manganese oxide, the iridium can be contained as, for example, cations, or contained as iridium cations at ion-exchangeable sites of the manganese oxide. When the iridium forms a solid solution with the manganese oxide, the iridium can be, for example, in a state in which at least a subset of iridium cations is substituted for manganese ions in the manganese oxide.

In order to exhibit high oxygen evolution electrode catalytic activity, the iridium-containing manganese oxide according to the present embodiment preferably contains the iridium in at least one of a state in which it is supported on the manganese oxide or a state in which it forms a solid solution with the manganese oxide. More preferably, the iridium-containing manganese oxide contains the iridium in a state in which part or all of it forms a solid solution with the manganese oxide.

The iridium-containing manganese oxide according to the present embodiment can be regarded as being in a state in which at least part of the iridium forms a solid solution with the manganese oxide when the relative area intensity of an XRD peak having a peak top at 2θ = 35.00° ± 1.00° as determined with the area intensity of the XRD peak having the highest area intensity in the XRD pattern defined as 100 (Hereinafter also referred to as "Ir relative intensity.") is 3 or less. For example, when the manganese oxide is β-type manganese dioxide, the XRD peak having the highest area intensity can be, for example, an XRD peak having a peak top at 2θ = 28° ± 1° (Hereinafter also referred to as "Mn peak.").

An XRD peak having a peak top at 2θ = 35.00° ± 1.00° is considered to be a main peak of an iridium compound. Since the iridium-containing manganese oxide according to the present embodiment preferably contains the iridium in a state in which it forms a solid solution with the manganese oxide, it is preferred that the Ir relative intensity be 0 or more and 3 or less, more preferably 0 or more and 1 or less. A manganese oxide on which iridium is supported and that also forms a solid solution with iridium, furthermore, is likely to undergo distortion in its crystal structure. In that case, the half width of the Mn peak of the manganese oxide containing iridium in a dissolved state tends to be greater in relation to that of the Mn peak of a manganese oxide containing no iridium in a dissolved state. For example, the half width of the Mn peak for a manganese oxide on which iridium is supported and that also forms a solid solution with iridium can be, for example, more than 1.90°, 2.30° or more or 2.50° or more, and can be, for instance, more than 1.90° and 4.0° or less, 2.30° or more and 3.50° or less or 2.50° or more and 3.50° or less.

The molar ratio of iridium to manganese (mol/mol; hereinafter also referred to as "Ir/Mn molar ratio.") in the iridium-containing manganese oxide according to the present embodiment is 0.001 or more and 0.250 or less. When the Ir/Mn molar ratio is less than 0.001, the iridium-containing manganese oxide behaves predominantly as a manganese oxide, and the oxygen evolution electrode catalytic activity significantly decreases. When the Ir/Mn molar ratio exceeds 0.250, however, the iridium easily elutes, and the oxygen evolution electrode catalytic activity is likely to decrease. The Ir/Mn molar ratio is preferably 0.004 or more or 0.008 or more, and preferably is 0.200 or less or 0.150 or less. The Ir/Mn molar ratio, furthermore, is preferably 0.004 or more and 0.200 or less or 0.008 or more and 0.150 or less.

The Ir/Mn molar ratio can be measured by inductively coupled plasma atomic emission spectroscopy (ICP-AES) using a commonly used ICP system (instrument name, Optima 830; manufactured by PerkinElmer, Inc.). That is, the manganese content and iridium content of the iridium-containing manganese oxide can be measured by ICP, and the Ir/Mn molar ratio of the iridium-containing manganese oxide can be determined from the iridium content obtained relative to the manganese content obtained.

The "manganese content" and the "iridium content" are the percentages by mass of manganese and iridium, respectively, relative to the mass of the iridium-containing manganese oxide and can be determined according to the following formulae. $Manganese content \left[% by mass\right] = \left({W}_{Mn}/W\right) \times 100$ (2) $Iridium content \left[% by mass\right] = \left({W}_{lr}/W\right) \times 100$ (3)

In the above formulae, W_{Mn} is the mass [g] of manganese in the iridium-containing manganese oxide, W_{Ir} is the mass [g] of iridium in the iridium-containing manganese oxide, and W is the mass [g] of the iridium-containing manganese oxide as determined by weighing.

In the iridium-containing manganese oxide according to the present embodiment, the iridium content is preferably 0.2% by mass or more or 0.8% by mass or more because this facilitates the development of sufficient catalytic activity for the oxygen evolution reaction. The iridium content, furthermore, is preferably 35% by mass or less or 30% by mass or less and preferably is 0.2% by mass or more and 35% by mass or less or 0.8% by mass or more and 30% by mass or less.

The D50 size of the iridium-containing manganese oxide according to the present embodiment is preferably 0.1 µm or more and 50.0 µm or less because this facilitates the contribution of the iridium to the catalytic reaction and, when the iridium-containing manganese oxide is made into an anode catalyst ink, helps apply the ink uniformly to an electrolyte membrane or an electrically conductive substrate. Preferably, the D50 size is 0.3 µm or more or 0.5 µm or more, preferably is 30.0 µm or less, 10.0 µm or less or 3.0 µm or less and preferably is 0.1 µm or more and 30.0 µm or less, 0.3 µm or more and 10.0 µm or less or 0.5 µm or more and 3.0 µm or less.

The standard deviation in the volume-based particle size distribution of the iridium-containing manganese oxide according to the present embodiment is preferably 0.05 µm or more, preferably is 5.0 µm or less, 3.0 µm or less or 2.0 µm or less and preferably is 0.05 µm or more and 5.0 µm or less, 0.05 µm or more and 3.0 µm or less or 0.05 µm or more and 2.0 µm or less.

The D16 size of the iridium-containing manganese oxide according to the present embodiment is preferably 0.05 µm or more, 0.15 µm or more or 0.25 µm or more, preferably is 30.00 µm or less, 20.00 µm or less or 10.00 µm or less and preferably is 0.05 µm or more and 30.00 µm or less, 0.15 µm or more and 20.00 µm or less or 0.25 µm or more and 10.00 µm or less.

The D84 size of the iridium-containing manganese oxide according to the present embodiment is preferably 0.5 µm or more, 1.0 µm or more or 1.5 µm or more, preferably is 60.0 µm or less, 50.0 µm or less or 30.0 µm or less and preferably is 0.5 µm or more and 60.0 µm or less, 1.0 µm or more and 50.0 µm or less or 1.5 µm or more and 30.0 µm or less.

In the present embodiment, the "D16 size," the "D50 size" and the "D84 size" are the particle size [µm] at which the cumulative frequency of particle sizes corresponds to 16%, the particle size [µm] at which the cumulative frequency of particle sizes corresponds to 50% and the particle size [µm] at which the cumulative frequency of particle sizes corresponds to 84%, respectively, in a cumulative volume-based particle size distribution obtained by laser diffraction and scattering. It should be noted that D50 is used interchangeably with "median size."

The D16 size, D50 size and D84 size of the iridium-containing manganese oxide according to the present embodiment can be measured under the following conditions using a commonly used particle size distribution analyzer (e.g., instrument name, MT-3100 II; manufactured by MicrotracBEL Corporation).
Measurement range: 0.02 to 2000 µm
Particle refractive index: 2.2
Particle transparency: transparent
Particle shape: nonspherical
Solvent refractive index: 1.333
Pretreatment by sonication: 10 minutes

The standard deviation can be calculated using the following formula from the D16 size and D84 size values obtained. $Standard deviation \left[μm\right] = \left(D84 size \left[μm\right]-D16 size \left[μm\right]\right) / 2$ (4)

The BET specific surface area of the iridium-containing manganese oxide according to the present embodiment is preferably 1 m²/g or more and 200 m²/g or less, preferably is 10 m²/g or more or 19 m²/g or more and 100 m²/g or less, 50 m²/g or less or 30 m²/g or less and more preferably is 1 m²/g or more and 100 m²/g or less, 10 m²/g or more and 50 m²/g or less or 19 m²/g or more and 30 m²/g or less.

The BET specific surface area can be measured by the one-point method as set forth in JIS Z8830: 2013 using a 30% by volume nitrogen-70% by volume helium mixed gas as the adsorptive gas with a commonly used measuring instrument (e.g., Macsorb, manufactured by MOUNTECH Co., Ltd.). The pretreatment of the measurement sample can be performed by placing the measurement sample in a glass cell for BET specific surface area measurement and performing dehydrating treatment for 20 minutes at 150°C in a flowing nitrogen atmosphere.

The iridium-containing manganese oxide according to the present embodiment can be used as a catalyst comprising it. When the iridium-containing manganese oxide according to the present embodiment is used as a catalyst, it can be used directly, or it can be used as a catalyst composition containing the iridium-containing manganese oxide according to the present embodiment (Hereinafter these are also collectively referred to as "catalysts according to the present embodiment."). A catalyst according to the present embodiment can preferably be used as an oxygen evolution electrode catalyst.

A catalyst according to the present embodiment can be used as an anode catalyst (oxygen evolution electrode catalyst) in water electrolysis in which a PEM electrolytic cell is used, and is expected to exhibit high oxygen evolution electrode catalytic activity.

The catalyst composition may be an anode catalyst ink containing the iridium-containing manganese oxide according to the present embodiment. For example, it may be a composition obtained by mixing the iridium-containing manganese oxide according to the present embodiment, water, ethanol and an ionomer (e.g., product name, Nafion dispersion solution; manufactured by Sigma-Aldrich Co. LLC). The composition may contain isopropyl alcohol, for example for the purpose of viscosity adjustment.

In the following, the method for manufacturing the iridium-containing manganese oxide according to the present embodiment will be described.

### [Method for Manufacturing the Iridium-Containing Manganese Oxide According to the Present Embodiment]

The method for manufacturing the iridium-containing manganese oxide according to the present embodiment is not particularly limited, as long as an iridium-containing manganese oxide having a configuration as described above is obtained. The manufacturing method, however, only needs to be a manufacturing method in which iridium can be introduced into at least part of a manganese oxide. A preferred example is at least one of a manufacturing method that includes a mixing step in which a manganese oxide source and an iridium salt solution are brought into contact to give a mixture and a heat treatment step in which the mixture is subjected to heat treatment (Hereinafter also referred to as "the powder method.") or a manufacturing method that includes an electrolysis step in which a manganese oxide is electrolytically deposited on an electrically conductive substrate, an iridium-introducing step in which the manganese oxide electrolytically deposited on the electrically conductive substrate and an iridium salt solution are brought into contact to give a mixture and the electrically conductive substrate and a heat treatment step in which the mixture and the electrically conductive substrate are subjected to heat treatment (Hereinafter also referred to as "the electrodeposition method.").

### <Powder Method>

An example of a preferred method for manufacturing the iridium-containing manganese oxide according to the present embodiment is a manufacturing method that includes a mixing step in which a manganese oxide source and an iridium salt solution are brought into contact to give a mixture and a heat treatment step in which the mixture is subjected to heat treatment. With the powder method, the iridium-containing manganese oxide according to the present embodiment can be obtained in powder form.

### Mixing Step:

In the mixing step of the powder method, a manganese oxide source and an iridium salt solution are brought into contact. As a result of this, iridium can be introduced into the manganese oxide source.

### Manganese Oxide Source:

The manganese oxide source can be, for example, one or more selected from the group consisting of manganese dioxide (MnO₂), trimanganese tetraoxide (Mn₃O₄) and dimanganese trioxide (Mn₂O₃). At least one of manganese dioxide or trimanganese tetraoxide is preferred, more preferably manganese dioxide. The manganese oxide source is preferably manganese dioxide having a γ-type crystal structure (Hereinafter also referred to as "γ-type manganese dioxide.") because it is likely to exhibit high oxygen evolution electrode catalytic activity when iridium is introduced thereinto.

When the manganese oxide source is γ-type manganese dioxide, it is preferred that the crystallite size of the γ-type manganese dioxide be 2.4 nm or more and 4.0 nm or less. When the crystallite size of the γ-type manganese dioxide is such a value, distortion of the structure of β-type manganese dioxide in the c-axis direction is facilitated in the iridium-containing manganese oxide obtained in the heat treatment step, which will be described later. The a/c ratio, therefore, is likely to be small, and, as a result, higher oxygen evolution electrode catalytic activity is expected to be obtained. More preferably, the crystallite size of the γ-type manganese dioxide is 2.6 or more and 3.5 or less, even more preferably 2.7 or more and 3.2 or less.

In the present embodiment, the "crystallite size of γ-type manganese dioxide" can be determined using the Scherrer equation below from the half width of an XRD peak having a peak top at 2θ = 22.5° ± 1.5° in an XRD pattern of the γ-type manganese dioxide obtained when CuKα radiation (λ = 1.5405 Å) is used as the X-ray source. 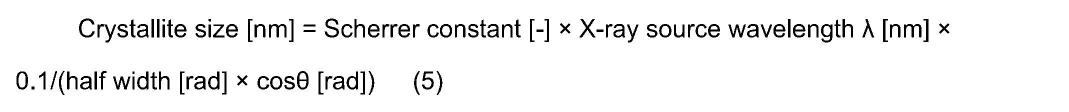 Crystallite size [nm] = Scherrer constant [-] × X-ray source wavelength λ [nm] × 0.1/(half width [rad] × cosθ [rad]) (5)

In the equation, the Scherrer constant is 0.879, and θ can be the Bragg angle.

The D50 size of the manganese oxide source is preferably 0.05 µm or more and 50.00 µm or less, more preferably 0.07 µm or more or 0.10 µm or more, preferably is 30.00 µm or less, 10.00 µm or less or 5.00 µm or less and preferably is 0.05 µm or more and 30.00 µm or less, 0.07 µm or more and 10.00 µm or less or 0.10 µm or more and 3.00 µm or less. When the D50 size of the manganese oxide source is such a value, it is more likely that an iridium-containing manganese oxide having a D50 size as specified above is obtained in the heat treatment step, which will be described later.

The D16 size of the manganese oxide source is preferably 0.05 µm or more, 0.15 µm or more or 0.25 µm or more, preferably is 30.00 µm or less, 20.00 µm or less or 10.00 µm or less and preferably is 0.05 µm or more and 30.00 µm or less, 0.15 µm or more and 20.00 µm or less or 0.25 µm or more and 10.00 µm or less.

The D84 size of the manganese oxide source is preferably 0.5 µm or more, 1.0 µm or more or 1.5 µm or more, preferably is 60.0 µm or less, 50.0 µm or less or 30.0 µm or less, and preferably is 0.5 µm or more and 60.0 µm or less, 1.0 µm or more and 50.0 µm or less or 1.5 µm or more and 30.0 µm or less.

To make the D50 size, D16 size and D84 size of the manganese oxide source values as specified above, the powder method may include, before the mixing step, a grinding step in which the manganese oxide source is ground. The grinding of the manganese oxide source can be performed using a known method, and examples include wet grinding or dry grinding.

### Iridium:

The iridium salt solution subjected to the mixing step can be any solution containing an iridium salt. A solution containing an iridium salt is preferred, more preferably an aqueous solution containing an iridium salt, and an aqueous iridium salt solution is more preferred. Examples of iridium salts include iridium(III) chloride (IrCl₃), iridium(IV) chloride (IrCl₄) and iridium nitrate (Ir(NO₃)₄), with iridium(III) chloride (IrCl₃) being preferred. In an aqueous iridium salt solution, one iridium salt may be used alone, or two or more may be used.

The iridium concentration of the iridium salt solution is preferably 0.001 g/L or more and 20 g/L or less.

The method for bringing the manganese oxide source and the iridium salt solution into contact is not particularly limited, as long as the conditions allow the desired amount of iridium to be introduced into the manganese oxide. With regard to specific conditions for the method, it is preferred that the contact temperature be 20°C or higher and 100°C or lower, and the duration of contact is preferably 30 minutes or longer and 100 hours or shorter. The inventors believe that when the contact temperature and the duration of contact fall within these ranges, the amount of iridium on the surface of the manganese oxide can be controlled. That is, the higher the contact temperature and the longer the duration of contact are, the more likely to increase the iridium content of the manganese oxide tends to be. When the contact temperature is high, furthermore, manganese atoms within the crystal structure of the manganese oxide are more likely to be substituted with iridium atoms. As a result, the inventors believe, the higher the contact temperature is, the more likely to substitute for manganese in the manganese oxide and form a solid solution iridium is, and the more likely to be achieved a state in which at least part of the iridium forms a solid solution with the manganese oxide is. For such reasons, the contact temperature is preferably 70°C or higher. For example, the contact temperature is preferably 70°C or higher and 100°C or lower.

### Heat Treatment Step:

In the heat treatment step of the powder method, the mixture obtained in the above mixing step is subjected to heat treatment. Through this, manganese atoms within the crystal structure of the manganese oxide are substituted with iridium atoms present on the surface or in pores of the manganese oxide, and, as a result, the amount of iridium that forms a solid solution with the manganese oxide can be increased. The heat treatment atmosphere in the heat treatment step is preferably an air atmosphere or an inert atmosphere, more preferably an air atmosphere, and the heat treatment temperature is preferably 100°C or higher and 600°C or lower. The duration of heat treatment can be set as appropriate according to the amount of the manganese oxide and other materials subjected to heat treatment. For example, however, the duration of heat treatment can be 10 minutes or longer and 24 hours or shorter.

With the powder method, there can be obtained an iridium-containing manganese oxide having an Ir/Mn molar ratio of 0.001 or more and 0.250 or less, preferably an iridium-containing manganese oxide having an Ir/Mn molar ratio of 0.001 or more and 0.250 or less in which the manganese oxide is β-type manganese dioxide, more preferably an iridium-containing manganese oxide having an Ir/Mn molar ratio of 0.001 or more and 0.250 or less in which the manganese oxide is β-type manganese dioxide and that has an a/c ratio of 1.420 or more and less than 1.521.

The form of the iridium-containing manganese oxide obtained by the powder method is preferably powder.

### <Electrodeposition Method>

Another example of a preferred method for manufacturing the iridium-containing manganese oxide according to the present embodiment is a manufacturing method that includes an electrolysis step in which a manganese oxide is electrolytically deposited on an electrically conductive substrate, an iridium-introducing step in which the manganese oxide electrolytically deposited on the electrically conductive substrate and an iridium salt solution are brought into contact to give a mixture and the electrically conductive substrate and a heat treatment step in which the mixture and the electrically conductive substrate are subjected to heat treatment. As a result of this, the iridium-containing manganese oxide according to the present embodiment can be obtained in a state in which it covers at least part of the electrically conductive substrate.

### Electrolysis Step:

In the electrolysis step of the electrodeposition method, a manganese oxide is electrolytically deposited on an electrically conductive substrate. As a result of this, a manganese oxide electrolytically deposited on an electrically conductive substrate (Hereinafter also referred to as "the manganese oxide source for electrodeposition.") is obtained.

The electrolytic deposition can be performed by any method, as long as the manganese oxide source for electrolysis is electrolytically deposited on the surface of the electrically conductive substrate. The method can be any method in which an electrolyte solution in which the electrically conductive substrate is immersed is subjected to electrolysis.

The electrically conductive substrate subjected to the electrolysis step can have any thickness of less than 500 µm, and preferably is an electrically conductive substrate having a thickness of 300 µm or less. The electrically conductive substrate, furthermore, can be any substrate formed of an electrically conductive material, and preferably is a substrate containing titanium.

The shape of the electrically conductive substrate can be, for example, one or more selected from the group consisting of a mesh-like shape, a cloth-like shape and a sheet shape. Preferably, the electrically conductive substrate is mesh-like because in that case it is more likely that the oxygen evolution electrode catalytic activity is high. Specific examples of electrically conductive substrates include a titanium mesh, which is composed of fibrous or powdered electrically conductive metallic titanium, and a sintered titanium mesh, which is obtained by heat treatment of a titanium mesh. Such an electrically conductive substrate preferably has a surface coated with platinum because in that case it is more likely that high oxygen evolution electrode catalytic properties are exhibited. More preferably, the electrically conductive substrate is a platinum-coated titanium mesh, even more preferably a platinum-coated sintered titanium mesh.

The manganese oxide source for electrodeposition is preferably manganese dioxide having a δ-type structure (Hereinafter also referred to as "δ-type manganese dioxide."). This facilitates ensuring that the manganese oxide into which iridium has been introduced in the iridium-introducing step, which will be described later, becomes γ-type manganese dioxide containing iridium and having a crystallite size of 2.4 nm or more and 4.0 nm or less.

The electrolyte solution only needs to allow the manganese oxide source for electrolysis to be electrolytically deposited on the surface of the electrically conductive substrate on the electrically conductive substrate and can be any solution containing manganese. The manganese concentration of the electrolyte solution is preferably 0.05 mol/L or more and 1.00 mol/L or less. The electrolyte solution is preferably a solution containing manganese sulfate, more preferably an aqueous manganese sulfate solution. In that case, the sulfuric acid concentration is preferably 0.05 mol/L or more and 1.00 mol/L or less, and, furthermore, the manganese concentration is preferably 0.05 mol/L or more and 1.00 mol/L or less.

The electrolyte solution, furthermore, preferably contains an ammonium salt. Inclusion of an ammonium salt facilitates obtaining δ-type manganese dioxide as the manganese oxide source for electrolysis. Ammonium ions have a template effect for forming the layered structure of δ-type manganese dioxide. Through incorporation of ammonium ions between layers of the δ-type manganese dioxide, furthermore, the growth of crystals of the δ-type manganese dioxide can be directed in a specific plane direction. As a result, it becomes more likely that the manganese oxide into which iridium has been introduced in the iridium-introducing step, which will be described later, becomes γ-type manganese dioxide containing iridium and having a crystallite size of 2.4 nm or more and 4.0 nm or less. In that case, the ammonium salt concentration of the electrolyte solution can be, for example, 0.1 mol/L or more and 3.0 mol/L or less. The ammonium salt can be, for example, one or more selected from the group consisting of ammonium sulfate, ammonium nitrate and ammonium chloride, and preferably is ammonium sulfate.

In the electrolytic deposition, an electrolyte solution in which the electrically conductive substrate is immersed can be subjected to electrolysis. The conditions for the electrolytic deposition can be any conditions under which the manganese oxide is electrolytically deposited. For example, the current density can be 0.3 mA/cm² or more and 20 mA/cm² or less per geometric area of the electrically conductive substrate, and the electrolysis temperature can be 93°C or higher and 98°C or lower.

### Iridium-Introducing Step:

In the iridium-introducing step of the electrodeposition method, the electrically conductive substrate and the manganese oxide electrolytically deposited on the electrically conductive substrate (hereinafter "the manganese oxide-containing substrate") and an iridium salt solution are brought into contact. Since the manganese oxide (manganese oxide source for electrodeposition) on the manganese oxide-containing substrate obtained in the above electrolysis step is in a state in which it has been deposited adhering to the electrically conductive substrate, the iridium-introducing step gives a mixture in which iridium is contained in the manganese oxide source for electrodeposition (Hereinafter also referred to as "the iridium-containing manganese oxide source for electrolysis."). As a result of this, the mixture and the electrically conductive substrate (Hereinafter also referred to as "the iridium-manganese oxide-containing substrate.") are obtained.

The iridium salt solution subjected to the iridium-introducing step can be any solution containing an iridium salt. A solution containing an iridium salt and sulfuric acid is preferred, more preferably an aqueous solution containing an iridium salt and sulfuric acid. The iridium salt can be, for example, one or more selected from the group consisting of iridium(III) chloride (IrCl₃), iridium(IV) chloride (IrCl₄), iridium nitrate (Ir(NO₃)₄), potassium hexachloroiridate (K₂IrCl₆) and hexachloroiridic acid (H₂IrCl₆).

When the manganese oxide source for electrolysis is δ-type manganese dioxide, it is preferred that the iridium salt be an iridium salt from which iridium dissociates as a cation in the solution because in that case the iridium salt is more likely to interact with the δ-type manganese dioxide by virtue of the cation exchange properties of δ-type manganese dioxide. Specifically, the iridium salt is preferably one or more selected from the group consisting of IrCl₃, IrCl₄ and Ir(NO₃)₄, more preferably IrCl₃.

The iridium concentration of the iridium salt solution is preferably 0.001 mmol/L or more and 5.000 mmol/L or less.

The contact between the manganese oxide-containing substrate and the iridium salt solution can be performed by immersing the manganese oxide-containing substrate in the iridium salt solution. The contact is not particularly limited, as long as the conditions allow the surface of the manganese oxide-containing substrate to be impregnated with iridium. For example, however, the contact temperature can be 20°C or higher and 100°C or lower. The duration of contact can be adjusted as appropriate according to the size of the manganese oxide-containing substrate, but for example, it can be 30 minutes or longer and 24 hours or shorter.

The mixture in which iridium is contained in the manganese oxide source for electrodeposition (Hereinafter also referred to as "the iridium-containing manganese oxide source for electrolysis.") is preferably γ-type manganese dioxide containing iridium, more preferably γ-type manganese dioxide containing iridium and having a crystallite size of 2.4 nm or more and 4.0 nm or less. Using δ-type manganese dioxide as the manganese oxide source for electrodeposition ensures that its crystal structure can be changed to γ-type manganese dioxide containing iridium when iridium is introduced into the manganese oxide source.

### Heat Treatment Step:

In the heat treatment step of the electrodeposition method, the iridium-manganese oxide-containing substrate is subjected to heat treatment. As a result of this, adhesion between the manganese oxide into which iridium has been introduced and the electrically conductive substrate increases. The heat treatment atmosphere in the heat treatment step can be, for example, an air atmosphere or an inert atmosphere, or can be an air atmosphere, and the heat treatment temperature can be, for example, 100°C or higher and 600°C or lower. The duration of heat treatment can be adjusted as appropriate according to the size of the electrically conductive substrate subjected to heat treatment. For example, however, the duration of heat treatment can be 10 minutes or longer and 24 hours or shorter.

With the electrodeposition method, there can be obtained an iridium-containing manganese oxide having an Ir/Mn molar ratio of 0.001 or more and 0.300 or less, preferably an iridium-containing manganese oxide having an Ir/Mn molar ratio of 0.001 or more and 0.300 or less, having a β-type crystal structure and having an a/c ratio of 1.420 or more and less than 1.521, and an electrode that includes a catalyst comprising the iridium-containing manganese oxide (a catalyst according to the present embodiment) and an electrically conductive substrate.

The iridium-containing manganese oxide obtained by the electrodeposition method is a manufacturing method in which an iridium-containing manganese oxide is electrolytically deposited on an electrically conductive substrate. With this method, therefore, an electrode that includes an iridium-containing manganese oxide according to the present embodiment and an electrically conductive substrate (hereinafter "electrode according to the present embodiment."), and an electrode that includes a catalyst according to the present embodiment and an electrically conductive substrate, can be directly manufactured.

An iridium-containing manganese oxide according to the present embodiment obtained by the powder method and that obtained by the electrodeposition method can each be used as a catalyst comprising the iridium-containing manganese oxide (a catalyst according to the present embodiment) and can preferably be used as an oxygen evolution electrode catalyst.

A catalyst according to the present embodiment can be used as an anode catalyst in an MEA in water electrolysis in which a PEM electrolytic cell is used. The MEA may be configured by using an iridium-containing manganese oxide obtained by the powder method as an anode catalyst in a CCM, or the MEA may be configured by using an electrode obtained by the electrodeposition method and a CCM consisting solely of a cathode catalyst and an electrolyte membrane. With either manufacturing method, the iridium-containing manganese oxide can exhibit significantly higher oxygen evolution electrode catalytic activity in the MEA compared with known iridium-containing manganese oxides.

With the electrolysis method, there can be obtained on an electrically conductive substrate an iridium-containing manganese oxide having an Ir/Mn molar ratio of 0.001 or more and 0.250 or less, preferably an iridium-containing manganese oxide that has an Ir/Mn molar ratio of 0.001 or more and 0.250 or less and in which the manganese oxide is β-type manganese dioxide, more preferably an iridium-containing manganese oxide that has an Ir/Mn molar ratio of 0.001 or more and 0.250 or less, in which the manganese oxide is β-type manganese dioxide and that has an a/c ratio of 1.420 or more and less than 1.521.

The form of the iridium-containing manganese oxide obtained by the electrolysis method is preferably an electrode that includes a catalyst comprising the iridium-containing manganese oxide and an electrically conductive substrate.

### Electrode:

An electrode according to the present embodiment can be used as an anode catalyst and an electrically conductive substrate in an MEA in water electrolysis in which a PEM electrolytic cell is used. In that case, the MEA can be configured by combining the electrode according to the present embodiment and a CCM consisting solely of a cathode catalyst and an electrolyte membrane (i.e., a CCM including no anode catalyst).

An electrode according to the present embodiment includes a catalyst comprising an iridium-containing manganese oxide having an Ir/Mn molar ratio of 0.001 or more and 0.250 or less, preferably an iridium-containing manganese oxide that has an Ir/Mn molar ratio of 0.001 or more and 0.250 or less and in which the manganese oxide is β-type manganese dioxide, more preferably an iridium-containing manganese oxide that has an Ir/Mn molar ratio of 0.001 or more and 0.250 or less, in which the manganese oxide is β-type manganese dioxide and that has an a/c ratio of 1.420 or more and less than 1.521, and an electrically conductive substrate.

The amount of metal per geometric area of the electrode according to the present embodiment (Hereinafter also referred to as "the metal content of the electrode.") is preferably 0.1 mg/cm² or more, 0.5 mg/cm² or more or 0.8 mg/cm² or more and preferably is 12.0 mg/cm² or less, 11.0 mg/cm² or less or 10.0 mg/cm² or less. For example, the metal content of the electrode can be 0.1 mg/cm² or more and 12.0 mg/cm² or less, 0.5 mg/cm² or more and 11.0 mg/cm² or less or 0.8 mg/cm² or more and 10.0 mg/cm² or less. When the metal content of the electrode is 0.1 mg/cm² or more, coverage of the electrically conductive substrate by the iridium-containing manganese oxide improves, and it becomes more likely that high oxygen evolution electrode catalytic activity is exhibited.

When the metal content of the electrode is 12.0 mg/cm² or less, on the other hand, the electrical resistance of the electrode decreases. As a result, it becomes more likely that high oxygen evolution electrode catalytic activity is exhibited.

The metal content of the electrode according to the present embodiment can be determined according to the following formula. $\begin{matrix}Metal content \left[{mg / cm}^{2}\right] of the electrode \\ = \left(\begin{matrix}manganese content \left[mg\right] of the electrode + iridium content \left[mg\right] of the \\ electrode\end{matrix}\right) / geometric area \left[{cm}^{2}\right] of the electrode\end{matrix}$ (6)

The manganese content of the electrode and the iridium content of the electrode can be determined by ICP in the same manner as in the measurement of the manganese content and iridium content of the iridium-containing manganese oxide. That is, an electrode having a geometric area of 1 cm² is impregnated with a mixed aqueous solution of hydrochloric acid and nitric acid, whereby the catalyst contained in the electrode is dissolved. The mixed solution in which the catalyst is dissolved is used as a measurement sample, and the amount of manganese and the amount of iridium in the measurement sample are determined by ICP. The results can be used as the manganese content of the electrode and the iridium content of the electrode.

A "geometric area" is an area corresponding to a projected area without considering surface irregularities and voids, and is the projected area of a surface (geometric surface) that faces an electrolyte membrane when a membrane-electrode assembly (Hereinafter also referred to as "MEA.") is configured. The "geometric area of an electrode" is the projected area of the electrode and, when the shape of the electrode is defined by longitudinal length × transverse length × width, is the area of the plane given by the longitudinal length × the transverse length.

The molar ratio of iridium to manganese per geometric area of the electrode according to the present embodiment (Hereinafter also referred to as "Ir/Mn molar ratio of the electrode.") can be the same as the Ir/Mn molar ratio in the iridium-containing manganese oxide according to the present embodiment.

The crystal structure, a/c ratio, lattice constant a, lattice constant c, Ir/Mn molar ratio, manganese content and iridium content of the iridium-containing manganese oxide contained in the electrode according to the present embodiment are the same as those of the iridium-containing manganese oxide according to the present embodiment; therefore, description thereof is omitted.

The electrically conductive substrate can be any substrate formed of an electrically conductive material, and preferably is a substrate containing titanium.

The shape of the electrically conductive substrate can be, for example, one or more selected from the group consisting of a mesh-like shape, a cloth-like shape and a sheet shape. Preferably, the electrically conductive substrate is mesh-like because in that case it is more likely that the oxygen evolution electrode catalytic activity is high. Specific examples of electrically conductive substrates include a titanium mesh, which is composed of fibrous or powdered electrically conductive metallic titanium, and a sintered titanium mesh, which is obtained by heat treatment of a titanium mesh. Such an electrically conductive substrate preferably has a surface coated with platinum because in that case it is more likely that high oxygen evolution electrode catalytic properties are exhibited. More preferably, the electrically conductive substrate is a platinum-coated titanium mesh, even more preferably a platinum-coated sintered titanium mesh.

When the electrically conductive substrate has a surface coated with platinum, the amount of platinum per geometric area is preferably 0.5 mg/cm² or more and 10.0 mg/cm² or less so that high electrical conductivity is exhibited. More preferably, the amount of platinum is 1.0 mg/cm² or more and 8.0 mg/cm² or less, even more preferably 1.0 mg/cm² or more and 6.0 mg/cm² or less.

The thickness of the electrically conductive substrate is preferably 50 µm or more and 500 µm or less so that excellent oxygen evolution electrode catalytic activity is exhibited. More preferably, the thickness is 100 µm or more and 400 µm or less, even more preferably 150 µm or more and 300 µm or less.

"Thickness" is a length corresponding to a length in the direction perpendicular to a geometric surface. The "thickness of the electrically conductive substrate" is a length corresponding to the length of the electrically conductive substrate in the direction perpendicular to the geometric surface thereof and, when the shape of the electrode is defined by longitudinal length × transverse length × width, is a length corresponding to the width.

The porosity of the electrically conductive substrate is preferably 30% or more and 80% or less, more preferably 40% or more and 70% or less. In this context, porosity is defined as the volume of void portions not occupied by the electrically conductive substrate or other substances relative to the volume of the electrically conductive substrate, and an example of a method for measuring porosity is mercury porosimetry. When the porosity falls within the above ranges, excellent advantages are obtained in that the mechanical strength of the electrode increases, and that supply of water, which is the reactant in oxygen evolution, can be smoothly performed.

Porosity in the present embodiment can be determined according to the following formula. 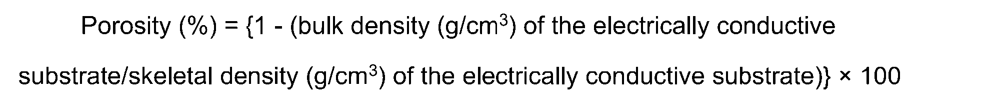 Porosity (%) = {1 - (bulk density (g/cm3) of the electrically conductive substrate/skeletal density (g/cm3) of the electrically conductive substrate)} × 100

The bulk density and skeletal density of the electrically conductive substrate are values that can be determined using the following formulae from the pore volume as measured by mercury porosimetry in which a commonly used mercury porosimeter device (instrument name, AutoPore 9510; manufactured by micromeritics Instrument Corporation) is used and from the volume of the electrically conductive substrate. 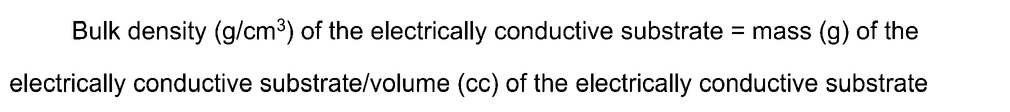 Bulk density (g/cm3) of the electrically conductive substrate = mass (g) of the electrically conductive substrate/volume (cc) of the electrically conductive substrate 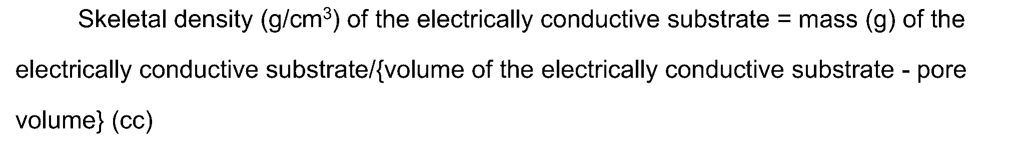 Skeletal density (g/cm3) of the electrically conductive substrate = mass (g) of the electrically conductive substrate/{volume of the electrically conductive substrate - pore volume} (cc)

In the above two formulae, the volume of the electrically conductive substrate is a value that can also be determined by measurement using a laser volumeter (instrument name, 3D Scanner CMM VL-700 series (a controller VL-700, a stage VL-750/VL-C35 and a measurement unit VL-770); manufactured by Keyence Corporation). The mass of the electrically conductive substrate, furthermore, is a value determined by mass measurement using an electronic balance.

An example of specific measurement conditions for a mercury porosimeter is the following conditions.
Amount of sample: 40 mg
Mercury introduction pressure: 601.6 psia to 36,098.1 psia (4.1 MPa to 248.9 MPa)
Pore sizes measured: 5 nm to 500 µm
Cell used: a glass cell having an intrusion volume of 5.3 cc
Mercury surface tension: 480 dyn
Mercury contact angle: 130°
Pretreatment conditions: degassing treatment for 1 hour or longer at 110°C in an air atmosphere

### [Method for Manufacturing the Electrode According to the Present Embodiment]

When the iridium-containing manganese oxide according to the present embodiment is an iridium-containing manganese oxide obtained by the electrodeposition method, the iridium-containing manganese oxide is in a state in which it is integral with an electrically conductive substrate. This structure, therefore, may be directly used as an electrode according to the present embodiment.

When the iridium-containing manganese oxide according to the present embodiment is an iridium-containing manganese oxide obtained by the powder method, on the other hand, an electrode according to the present embodiment is obtained by making the iridium-containing manganese oxide into a catalyst ink and applying the catalyst ink to an electrically conductive substrate. The catalyst ink only needs to be in a state in which the Ir-Mn oxide is dispersed in a solvent, and the solvent can be water, an alcohol or a mixed solvent composed of water and an alcohol.

### EXAMPLES

In the following, the present invention will be described in detail by providing examples. It should be noted that the present invention is not limited to the examples presented below in any way.

### <Composition Analysis>

A prepared sample was dissolved using a hydrochloric acid-nitric acid mixed solution, and the manganese content and iridium content of the prepared sample were measured by inductively coupled plasma atomic emission spectroscopy (ICP-AES) using a commonly used ICP system (instrument name, Optima 830; manufactured by PerkinElmer, Inc.). From the manganese content and iridium content obtained, the Ir/Mn molar ratio of the prepared sample was determined.

### <Particle Size Distribution>

The volume-based particle size distribution was determined by measuring the volume-based particle size distribution using a laser diffraction-scattering particle size analyzer (instrument name, Microtrac MT3300EX II; manufactured by MicrotracBEL Corporation). The measurement conditions are as follows.
Measurement range: 0.02 to 2000 µm
Particle refractive index: 2.2
Particle transparency: transparent
Particle shape: nonspherical
Solvent refractive index: 1.333
Pretreatment by sonication: 10 minutes

From the volume-based particle size distribution obtained, the D16 size [µm], D50 size (median size) [µm] and D84 size [µm] of the prepared sample were obtained. From the D16 size and D84 size values obtained, furthermore, the standard deviation was calculated using formula (4) above.

### <BET Specific Surface Area>

Through measurement according to JIS Z 8830: 2013, the BET specific surface area of the prepared sample was determined. That is, 0.3 g of the prepared sample was placed into a glass cell for BET specific surface area measurement, and dehydrating treatment was performed for 20 minutes at 150°C in a flowing nitrogen atmosphere as a pretreatment. Using a commonly used BET specific surface area measuring instrument (product name, Macsorb^{®}; manufactured by MOUNTECH Co., Ltd.) with a 30% by volume nitrogen-70% by volume helium mixed gas as the adsorptive gas, measurement of the BET specific surface area of the prepared sample after the pretreatment was performed by the one-point method.

### <Full Width at Half Maximum (FWHM)>

Using a commonly used X-ray powder diffractometer (instrument name, Ultima IV Protectus; manufactured by Rigaku Corporation), an XRD pattern was obtained under the following conditions.
Accelerating current and voltage: 40 mA and 40 kV
X-ray source: CuKα radiation (λ = 1.5405 Å)
Measurement mode: continuous scanning
Scan condition: 4°/min
Measurement range: 2θ = 10° to 80°
Vertical divergence-limiting slit: 10 mm
Divergence/Incident slits: 1°
Receiving slit: open
Detector: D/teX Ultra
A Ni filter was used

By comparing the XRD pattern obtained and a reference pattern, the crystal phase of the prepared sample was identified. The reference pattern used was PDF No. 14-0644 (γ-type MnO₂), 24-0735 (β-type MnO₂), 30-0820 (ε-type MnO₂), 80-1098 (δ-type) or 44-0141 (α-type MnO₂), respectively.

The XRD pattern of the prepared sample was analyzed using the analysis software attached to the X-ray powder diffractometer (product name, PDXL2; manufactured by Rigaku Corporation). The full width at half maximum (°) of an XRD peak having a peak top at 2θ = 28° ± 1.5° was determined and used as the half width (°).

The XRD pattern obtained, furthermore, was subjected to background subtraction using the analysis software attached to the X-ray powder diffractometer (product name, PDXL2; manufactured by Rigaku Corporation). Thereafter, lattice spacings d [Å] were determined using the diffraction angles [°] at the peak top of the (110) peak and the

(101) peak and Bragg's law, whereby lattice constant a [Å] and lattice constant c [Å] in the tetragonal phase were calculated. From the lattice constant a and lattice constant c obtained, the a/c ratio was calculated using formula (1) above.

### EXAMPLE 1:

### <Preparation of Iridium-Containing Manganese Oxide Powder>

Electrolytic manganese dioxide (product name, HMR-AF; manufactured by Tosoh Corporation) was subjected to jet mill grinding treatment, whereby a manganese dioxide powder having a median size of 0.5 µm and a BET specific surface area of 47 m²/g (manganese oxide source) was obtained. This manganese dioxide was γ-type manganese dioxide having a crystallite size of 3.0 nm.

500 mg of the powder of manganese dioxide was immersed for 48 hours at 95°C in an iridium salt solution bath containing 33.2 mL of an aqueous solution of potassium hexachloroiridate (K₂IrCl₆) having a K₂IrCl₆ concentration of 1.60 g/L (53 mg as K₂IrCl₆). Solid-liquid separation was performed, whereby a mixture was obtained. The resulting mixture was dried for 2 hours at 90°C in an air atmosphere and then cooled to room temperature by allowing it to stand, and then annealing treatment was performed for 5 hours at 450°C in an air atmosphere. In this manner, an iridium-containing manganese oxide powder was obtained.

An XRD pattern of the powder indicated that the product had a β-type crystal structure, an Ir relative intensity of 0 and a half width of the Mn peak of 2.12, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 2:

An iridium-containing manganese oxide powder was obtained in the same manner as in Example 1, except that 33.2 mL of an aqueous solution of K₂IrCl₆ having a K₂IrCl₆ concentration of 3.98 g/L (132 mg as K₂IrCl₆) was used as the aqueous solution of K₂IrCl₆.

An XRD pattern of the powder indicated that the product had a β-type crystal structure, an Ir relative intensity of 0 and a half width of the Mn peak of 2.40, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 3:

An iridium-containing manganese oxide powder was obtained in the same manner as in Example 1, except that 33.2 mL of an aqueous solution of K₂IrCl₆ having a K₂IrCl₆ concentration of 9.97 g/L (331 mg as K₂IrCl₆) was used as the aqueous solution of K₂IrCl₆.

An XRD pattern of the powder indicated that the product had a β-type crystal structure, an Ir relative intensity of 0 and a half width of the Mn peak of 2.99, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 4:

An iridium-containing manganese oxide powder was obtained in the same manner as in Example 1, except that 33.2 mL of an aqueous solution of K₂IrCl₆ having a K₂IrCl₆ concentration of 19.91 g/L (661 mg as K₂IrCl₆) was used as the aqueous solution of K₂IrCl₆.

An XRD pattern of the powder indicated that the product had a β-type crystal structure, an Ir relative intensity of 0 and a half width of the Mn peak of 2.99, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 5:

An iridium-containing manganese oxide powder was obtained in the same manner as in Example 1, except that an electrolytic manganese dioxide powder having a γ-type crystal structure, a crystallite size of 2.5 nm, a median size of 2.3 µm and a BET specific surface area of 45 m²/g (product name, FM; manufactured by Tosoh Corporation) was used instead of ground manganese dioxide, and that this powder of manganese dioxide was immersed for 24 hours in an iridium salt solution bath containing 99.8 mL of an aqueous solution of K₂IrCl₆ having a K₂IrCl₆ concentration of 2.504 g/L (250 mg as K₂IrCl₆).

An XRD pattern of the powder indicated that the product had a β-type crystal structure, an Ir relative intensity of 0 and a half width of the Mn peak of 2.20, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 6:

An iridium-containing manganese oxide powder was obtained in the same manner as in Example 1, except that an electrolytic manganese dioxide powder having a γ-type crystal structure, a crystallite size of 2.5 nm, a median size of 2.3 µm and a BET specific surface area of 45 m²/g (product name, FM; manufactured by Tosoh Corporation) was used instead of ground manganese dioxide, and that this powder of manganese dioxide was immersed for 96 hours in an iridium salt solution bath containing 99.8 mL of an aqueous solution of K₂IrCl₆ having a K₂IrCl₆ concentration of 2.504 g/L (250 mg as K₂IrCl₆).

An XRD pattern of the powder indicated that the product had a β-type crystal structure, an Ir relative intensity of 0 and a half width of the Mn peak of 2.91, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 7:

An iridium-containing manganese oxide powder was obtained in the same manner as in Example 1, except that an electrolytic manganese dioxide powder having a median size of 7.9 µm and a BET specific surface area of 36 m²/g (product name, LM-10P; manufactured by Tosoh Corporation) was used as the manganese dioxide, and that this powder of manganese dioxide was immersed for 96 hours in an iridium salt solution bath containing 13.9 mL of an aqueous solution of K₂IrCl₆ having a K₂IrCl₆ concentration of 20.00 g/L (278 mg as K₂IrCl₆).

An XRD pattern of the powder indicated that the product had a β-type crystal structure, an Ir relative intensity of 0 and a half width of the Mn peak of 2.52, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 8:

A slurry having a solids concentration of 20% by mass was prepared by mixing 2 kg of a source powder of electrolytic manganese dioxide (product name, HMR-AF; manufactured by Tosoh Corporation) with purified water, and the slurry was ground for 3 hours using a grinder (instrument name, DYNO-MILL; manufactured by Shinmaru Enterprise Corporation) under the conditions of a 0.5-mm diameter zirconia medium, a filling ratio of 80% by volume and a peripheral speed of 14 m/sec. After grinding, drying was performed overnight at 90°C in an air atmosphere, whereby a powder of electrolytic manganese dioxide was obtained. This electrolytic manganese dioxide was γ-type manganese dioxide having a crystallite size of 3.0 nm and a D50 size of 0.4 µm.

500 mg of the powder of electrolytic manganese dioxide was immersed for 24 hours at 95°C in an iridium salt solution bath containing 68.6 mL of an aqueous solution of IrCl₃ (IrCl₃ concentration: 0.005 mol/L). Solid-liquid separation was performed, whereby a mixture was obtained. The resulting mixture was dried for 2 hours at 90°C in an air atmosphere and then cooled to room temperature by allowing it to stand. Then annealing treatment was performed for 5 hours at 450°C in an air atmosphere, whereby an iridium-containing manganese oxide powder of this example was obtained. An XRD pattern of the powder indicated that the product had a β-type crystal structure, an Ir relative intensity of 0 and a half width of the Mn peak of 2.51, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 9:

An iridium-containing manganese oxide powder of this example was obtained in the same manner as in Example 8, except that 68.6 mL of an aqueous solution of Ir(NO₃)₄ (Ir(NO₃)₄ concentration: 0.005 mol/L) was used as the iridium salt solution. An XRD pattern of the powder indicated that the product had a β-type crystal structure, an Ir relative intensity of 0 and a half width of the Mn peak of 2.45, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 10:

An iridium-containing manganese oxide powder of this example was obtained in the same manner as in Example 8, except that 114.3 mL of an aqueous solution of Ir(NO₃)₄ (Ir(NO₃)₄ concentration: 0.005 mol/L) was used as the iridium salt solution. An XRD pattern of the powder indicated that the product had a β-type crystal structure, an Ir relative intensity of 0 and a half width of the Mn peak of 2.77, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 11:

An iridium-containing manganese oxide powder of this example was obtained in the same manner as in Example 8, except that 45.7 mL of an aqueous solution of IrCl₄ (IrCl₄ concentration: 0.004 mol/L) was used as the iridium salt solution. An XRD pattern of the powder indicated that the product had a β-type crystal structure, an Ir relative intensity of 0 and a half width of the Mn peak of 2.70, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 12:

An iridium-containing manganese oxide powder of this example was obtained in the same manner as in Example 8, except that 96.0 mL of an aqueous solution of IrCl₄ (IrCl₄ concentration: 0.004 mol/L) was used as the iridium salt solution. An XRD pattern of the powder indicated that the product had a β-type crystal structure, an Ir relative intensity of 0 and a half width of the Mn peak of 2.35, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 13:

An iridium-containing manganese oxide powder of this example was obtained in the same manner as in Example 8, except that 160.0 mL of an aqueous solution of IrCl₄ (IrCl₄ concentration: 0.004 mol/L) was used as the iridium salt solution. An XRD pattern of the powder indicated that the product had a β-type crystal structure, an Ir relative intensity of 0 and a half width of the Mn peak of 2.19, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 14:

A sulfuric acid-manganese sulfate-ammonium sulfate mixed solution having a sulfuric acid concentration of 0.3 mol/L, a manganese sulfate concentration of 0.5 mol/L and an ammonium sulfate concentration of 1.5 mol/L was placed into an electrolytic cell, and an electrically conductive substrate formed of a Ti fiber sintered body coated with platinum (product name, Pt-plated Ti fiber sintered body; manufactured by Tanaka Precious Metal Technologies Co., Ltd.) was immersed in this electrolytic cell. An electric current was applied to the electrically conductive substrate for 10 minutes at a current density of 7 mA/cm², whereby a manganese oxide was electrochemically deposited on the electrically conductive substrate. This manganese oxide was δ-type manganese dioxide.

Then the electrically conductive substrate retaining a deposited manganese oxide obtained in the foregoing was immersed for 24 hours at 95°C in an iridium salt solution containing 0.1 mmol/L of iridium(III) chloride (IrCl₃) and 0.01 mol/L of sulfuric acid, whereby a mixture and the electrically conductive substrate were obtained. This mixture was γ-type manganese dioxide containing iridium having a crystallite size of 3.1 nm. The mixture and the electrically conductive substrate were subjected to annealing treatment for 5 hours at 450°C in an air atmosphere, whereby an iridium-containing manganese oxide of this example deposited on the electrically conductive substrate was obtained.

An XRD pattern of the powder indicated that the product had a β-type crystal structure, an Ir relative intensity of 0 and a half width of the Mn peak of 2.03, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### EXAMPLE 15:

A manganese oxide was electrochemically deposited on an electrically conductive substrate in the same manner as in Example 14, except that a sulfuric acid-manganese sulfate mixed solution having a sulfuric acid concentration of 0.36 mol/L and a manganese sulfate concentration of 0.36 mol/L was placed into an electrolytic cell. This manganese oxide was γ-type manganese dioxide.

Then the electrically conductive substrate retaining a deposited manganese oxide obtained in the foregoing was immersed for 24 hours at 95°C in an iridium salt solution containing 0.1 mmol/L of potassium hexachloroiridate (K₂IrCl₆) and 0.01 mol/L of sulfuric acid, whereby a mixture and the electrically conductive substrate were obtained. This mixture was γ-type manganese dioxide containing iridium having a crystallite size of 3.8 nm. The mixture and the electrically conductive substrate were subjected to annealing treatment for 5 hours at 450°C in an air atmosphere, whereby an iridium-containing manganese oxide of this example deposited on the electrically conductive substrate was obtained.

An XRD pattern of the powder indicated that the product had a β-type crystal structure, an Ir relative intensity of 0 and a half width of the Mn peak of 2.29, thereby revealing that the product was iridium-containing β-type manganese dioxide containing iridium in a state in which at least part thereof formed a solid solution with the manganese oxide. Evaluation results for this iridium-containing β-type manganese dioxide are presented in the tables below.

### COMPARATIVE EXAMPLE 1:

Electrolytic manganese dioxide (product name, HMR-AF; manufactured by Tosoh Corporation) was subjected to grinding treatment, whereby a manganese dioxide powder having a median size of 0.5 µm and a BET specific surface area of 47 m²/g (manganese oxide source) was obtained.

500 mg of the resulting powder of manganese dioxide (manganese oxide source) was subjected to annealing treatment for 5 hours at 450°C in an air atmosphere to give a powder of β-type manganese dioxide, whereby a powder of this comparative example was obtained. The half width of the Mn peak was 2.06. This powder, furthermore, had a D16 size of 0.5 µm, a D50 size of 0.7 µm, a D84 size of 1.9 µm and a standard deviation of 0.7 µm. Evaluation results for this powder are presented in the tables below.

**[Table 1]**

| | Crystal structure (-) | Ir/Mn molar ratio (mol/mol) | Mn peak half width (°) | Ir peak relative intensity (-) |
|---|---|---|---|---|
| Example 1 | β-type manganese dioxide | 0.008 | 2.12 | 0 |
| Example 2 | β-type manganese dioxide | 0.024 | 2.40 | 0 |
| Example 3 | β-type manganese dioxide | 0.043 | 2.99 | 0 |
| Example 4 | β-type manganese dioxide | 0.065 | 2.99 | 0 |
| Example 5 | β-type manganese dioxide | 0.021 | 2.20 | 0 |
| Example 6 | β-type manganese dioxide | 0.043 | 2.91 | 0 |
| Example 7 | β-type manganese dioxide | 0.025 | 2.52 | 0 |
| Example 8 | β-type manganese dioxide | 0.072 | 2.51 | 0 |
| Example 9 | β-type manganese dioxide | 0.068 | 2.45 | 0 |
| Example 10 | β-type manganese dioxide | 0.114 | 2.77 | 0 |
| Example 11 | β-type manganese dioxide | 0.034 | 2.70 | 0 |
| Example 12 | β-type manganese dioxide | 0.066 | 2.35 | 0 |
| Example 13 | β-type manganese dioxide | 0.116 | 2.19 | 0 |
| Example 14 | β-type manganese dioxide | 0.024 | 2.03 | 0 |
| Example 15 | β-type manganese dioxide | 0.024 | 2.29 | 0 |
| Comparative Example 1 | β-type manganese dioxide | 0 | 2.06 | 0 |

**[Table 2]**

| | D50 size (µm) | D16 size (µm) | D84 size (µm) | Standard deviation (µm) | BET specific surface area (m²/g) |
|---|---|---|---|---|---|
| Example 1 | 0.7 | 0.5 | 1.9 | 0.7 | 19 |
| Example 2 | 0.7 | 0.5 | 1.9 | 0.7 | 22 |
| Example 3 | 0.7 | 0.5 | 1.9 | 0.7 | 25 |
| Example 4 | 0.7 | 0.5 | 1.9 | 0.7 | 25 |
| Example 5 | 3.2 | 1.3 | 6.5 | 2.6 | 20 |
| Example 6 | 3.7 | 2.0 | 7.1 | 2.6 | 23 |
| Example 7 | 9.1 | 3.3 | 15.6 | 6.2 | 8 |
| Example 8 | 0.4 | 0.3 | 0.5 | 0.1 | 33 |
| Example 9 | 0.4 | 0.3 | 0.5 | 0.1 | 45 |
| Example 10 | 0.4 | 0.3 | 0.5 | 0.1 | 44 |
| Example 11 | 0.4 | 0.3 | 0.5 | 0.1 | 29 |
| Example 12 | 0.4 | 0.3 | 0.5 | 0.1 | 31 |
| Example 13 | 0.4 | 0.3 | 0.5 | 0.1 | 34 |
| Comparative Example 1 | 0.7 | 0.5 | 1.9 | 0.7 | 22 |

**[Table 3]**

| | a/c ratio (-) | Lattice constant a (Å) | Lattice constant c (Å) |
|---|---|---|---|
| Example 1 | 1.521 | 4.393 | 2.888 |
| Example 5 | 1.524 | 4.404 | 2.889 |
| Example 6 | 1.522 | 4.388 | 2.883 |
| Example 7 | 1.521 | 4.400 | 2.893 |
| Example 8 | 1.516 | 4.396 | 2.900 |
| Example 9 | 1.517 | 4.397 | 2.898 |
| Example 10 | 1.518 | 4.402 | 2.899 |
| Example 11 | 1.518 | 4.395 | 2.896 |
| Example 12 | 1.516 | 4.397 | 2.901 |
| Example 13 | 1.519 | 4.411 | 2.903 |
| Example 14 | 1.517 | 4.441 | 2.927 |
| Example 15 | 1.491 | 4.380 | 2.938 |
| Comparative Example 1 | 1.525 | 4.398 | 2.885 |

### MEASUREMENT EXAMPLE 1:

### <Oxygen Evolution Electrode Catalyst Evaluation>

For each example or comparative example, a membrane-electrode assembly (Hereinafter also referred to as "MEA.") including the iridium-containing manganese oxide as an anode catalyst and a PEM water electrolysis cell including this MEA were prepared by the following method.

### Preparation of PEM Water Electrolysis Cells Using EXAMPLES 1 to 13 and COMPARATIVE EXAMPLE 1:

A cathode catalyst ink was prepared by mixing a solution containing water, ethanol and an ionomer (product name, Nafion dispersion solution; manufactured by Sigma-Aldrich Co. LLC) and a 20% by mass platinum-supporting carbon catalyst (product name, 20% Platinum on Vulcan XC-72; manufactured by Sigma-Aldrich Co. LLC). The preparation was performed with the water:ethanol:ionomer ratio by mass in the cathode catalyst ink being 55.5:43.5:1.0. This ink was applied to carbon paper (product name, TGP-H-060H; manufactured by Toray Industries, Inc.) such that the amount of platinum supported per geometric area was 0.3 mg/cm², and the paper was air-dried. In this manner, a cathode electrode was prepared.

Then a cation-exchange membrane (product name, Nafion 115; manufactured by Sigma-Aldrich Co. LLC) was washed and protonated by boiling for 1 hour in a 3% by mass aqueous solution of hydrogen peroxide, 1 hour in purified water and 1 hour in a 1 M aqueous solution of sulfuric acid in this order, whereby an electrolyte membrane was prepared.

For each of Examples 1 to 13 and Comparative Example 1, furthermore, the iridium-containing manganese oxide was mixed into a solution containing water, isopropanol and an ionomer (product name, Nafion dispersion solution; manufactured by Sigma-Aldrich Co. LLC), whereby an anode catalyst ink was prepared. The preparation was performed with the water:isopropanol:ionomer ratio by mass in the anode catalyst ink being 55.9:43.8:0.3. This ink was applied to a PTFE sheet having a thickness of 0.05 mm (manufactured by Tokyo Garasu Kikai Co., Ltd.) such that the amount of Ir supported per geometric area was 0.1 mg/cm². The sheet was air-dried, whereby a sheet having a catalyst layer was obtained.

The sheet having a catalyst layer and the electrolyte membrane were stacked such that the surface with the applied anode catalyst faced the electrolyte membrane. Hot pressing was performed for 10 minutes at 140°C with a clamping force of 80 kg/cm² using a hot press machine (product name, SA-302; manufactured by Tester Sangyo Co., Ltd.), and the PTFE sheet was removed. In this manner, a catalyst-coated electrolyte membrane was obtained.

A Ti fiber sintered body coated with platinum (product name: Pt-plated Ti fiber sintered body; manufactured by Tanaka Precious Metal Technologies Co., Ltd.; hereinafter also referred to as "anode current collector."), the catalyst-coated electrolyte membrane and the cathode electrode were stacked in this order such that the anode current collector faced the surface of the catalyst-coated electrolyte membrane to which the anode catalyst was applied, and that the surface of the catalyst-coated electrolyte membrane to which no catalyst was applied faced the surface of the cathode electrode to which the cathode catalyst was applied. Thereafter, the resulting multilayer body was hot-pressed for 3 minutes at 130°C with a clamping force of 50 kg/cm² using a hot press machine, whereby an MEA was obtained. The resulting MEA was attached to the housing of a PEM water electrolysis cell (product name, WE-4S-RICW; manufactured by FC Development Co., Ltd.). In this manner, a PEM water electrolysis cell was prepared.

### Preparation of PEM Water Electrolysis Cells Using EXAMPLE 14 and EXAMPLE 15:

For each of Example 14 and Example 1, an electrically conductive substrate including the iridium-containing manganese oxide was used as the working electrode (anode).

An electrically conductive catalyst ink was prepared by mixing a 20% by mass platinum-supporting carbon catalyst (product name, 20% Platinum on Vulcan XC-72; manufactured by Sigma-Aldrich Co. LLC) into a solution containing water, ethanol and an ionomer (product name, Nafion dispersion solution; manufactured by Sigma-Aldrich Co. LLC). The ink was applied to carbon paper (product name, TGP-H-060; manufactured by Toray Industries, Inc.), the paper was air-dried, and the dried paper was used as the counter electrode.

Then a Nafion membrane (product name, Nafion 115; manufactured by Sigma-Aldrich Co. LLC) was washed and protonated by boiling it for 1 hour in a 3% by mass aqueous solution of hydrogen peroxide, for 1 hour in purified water, for 1 hour in a 1 M aqueous solution of sulfuric acid and for 1 hour in purified water in this order, and the resulting membrane was used as the electrolyte membrane.

The electrolyte membrane was sandwiched between the catalyst surfaces of the working electrode (anode) and the counter electrode. The resulting structure was hot-pressed for 3 minutes at 135°C with a clamping force of 400 kg/cm² using a hot press machine (product name, SA-302; manufactured by Tester Sangyo Co., Ltd.), whereby an MEA was obtained. The resulting MEA was attached to the housing of a PEM water electrolysis cell (product name, WE-4S-RICW; manufactured by FC Development Co., Ltd.). In this manner, a PEM water electrolysis cell was prepared.

### <Evaluation of Oxygen Evolution Electrode Catalyst Performance>

Using the PEM water electrolysis cell, the current density at a voltage of 2 V was measured by linear sweep voltammetry (LSV) in a two-electrode system under the following conditions, and the result was evaluated as oxygen evolution electrode catalyst performance.
Voltage increase rate: 10 mV/sec
Water temperature: 80°C
Water supply rate: 2 mL/min

For each example or comparative example, an MEA including the powder as the anode catalyst and a PEM water electrolysis cell including the MEA were prepared, and the oxygen evolution electrode catalyst was evaluated. The results are presented in the table below.

**[Table 4]**

| | Current density (A/cm²) |
|---|---|
| Example 1 | 0.51 |
| Example 2 | 0.85 |
| Example 3 | 1.62 |
| Example 4 | 2.28 |
| Example 5 | 0.58 |
| Example 6 | 0.68 |
| Example 7 | 0.33 |
| Example 8 | 2.71 |
| Example 9 | 2.63 |
| Example 10 | 2.70 |
| Example 11 | 2.50 |
| Example 12 | 2.60 |
| Example 13 | 2.63 |
| Example 14 | 4.06 |
| Example 15 | 3.24 |
| Comparative Example 1 | 0.32 |

From Table 1, it was confirmed that iridium-supporting manganese oxide powders containing iridium and having an Ir/Mn molar ratio of 0.001 or more and 0.25 or less exhibit higher oxygen evolution electrode catalytic activity compared with Comparative Example 1, in which no iridium was contained.

It was confirmed that the current density increases with increasing Ir/Mn molar ratio, and that for samples having an Ir/Mn molar ratio of 0.065 mol/mol, a current density of 2 A/cm² or more is achieved.

In all of Examples 1 to 4 and Comparative Example 1, the D16 size was 0.5 µm, the D50 size was 0.7 µm, the D84 size was 1.9 µm, and the standard deviation was 0.7 µm, demonstrating that treatment with an aqueous solution of K₂IrCl₆ and subsequent heat treatment has no influence on particle sizes.

It was confirmed that the current density increases with decreasing a/c ratio, and that iridium-containing manganese oxides having an a/c ratio of less than 1.521 exhibit high oxygen evolution electrode catalyst.

### INDUSTRIAL APPLICABILITY

The present disclosure provides at least one of an iridium-containing manganese oxide that exhibits high oxygen evolution electrode catalytic activity, a catalyst comprising the same, an electrode comprising the catalyst or a water electrolysis method in which the electrode is used.

## Claims

1. An iridium-containing manganese oxide having a molar ratio of iridium to manganese of 0.001 or more and 0.250 or less.

2. The iridium-containing manganese oxide according to claim 1, wherein the manganese oxide is manganese dioxide having a β-type crystal structure.

3. The iridium-containing manganese oxide according to claim 2, wherein a ratio of a lattice constant in an a-axis direction to a lattice constant in a c-axis direction is 1.420 or more and less than 1.521.

4. The iridium-containing manganese oxide according to any one of claims 1 to 3, wherein a D50 size in a volume-based particle size distribution is 0.1 µm or more and 50.0 µm or less.

5. The iridium-containing manganese oxide according to any one of claims 1 to 3, wherein a BET specific surface area is 1 m²/g or more and 200 m²/g or less.

6. The iridium-containing manganese oxide according to any one of claims 1 to 3, wherein in an X-ray powder diffraction pattern, a full width at half maximum of a peak that appears at 2θ = 28° ± 1.5° when CuKα radiation is used as an X-ray source is more than 1.90° and 4.00° or less.

7. A catalyst comprising the iridium-containing manganese oxide according to any one of claims 1 to 3.

8. An electrode comprising the catalyst according to claim 7.

9. A water electrolysis method in which the electrode according to claim 8 is used.
